# FASCICULE DE BREVET EUROPEEN

(11) **EP 2 279 921 B1**
(45) Date de publication et mention de la délivrance du brevet: **28.03.2012**
(21) Numéro de dépôt: 10170084.7
(22) Date de dépôt: 20.07.2010
(51) Int. Cl.: B60T 11/26, B60T 17/06, B60T 17/22

(54) **Réservoir de liquide de frein**
Flussigkeitsbehälter für Bremssystem für Fahrzeuge
Vehicle tank for brake system liquid

(30) Priorité: 31.07.2009 FR 0955401
(43) Date de publication de la demande: 02.02.2011
(73) Titulaire: Robert Bosch GmbH, 70442 Stuttgart (DE)
(72) Inventeur: L'Aot, Jean-Michel, 93240, Stains (FR); Lenczner, Sylvain, 77450, Esbly (FR); Maury, Vincent, 92600, Asnières sur Seine (FR)
(74) Mandataire: Hurwic, Aleksander Wiktor

(56) Documents cités:
- EP-A1- 0 578 546
- EP-A1- 1 600 348
- EP-A1- 1 987 993
- DE-C1- 3 633 872
- FR-A1- 2 844 240
- FR-A1- 2 912 716
- FR-A1- 2 918 944

## Description

### Domaine de l'invention

La présente invention concerne un réservoir de liquide de frein pour un circuit de frein de véhicule, destiné à être rempli par un appareil de purge à un niveau déterminé, le réservoir comportant un goulot et l'appareil de purge comportant une tête s'appuyant de manière étanche sur le goulot pour purger le réservoir et le circuit de frein avant le remplissage avec le liquide de frein, la tête se prolongeant par un embout définissant le niveau de référence du liquide de frein dans le réservoir lorsque la tête est appliquée contre le goulot.

### Etat de la technique

Les réservoirs de liquide de frein du type défini ci-dessus sont connus de manière générale **et décrits dans** FR 2 918 944**,** EP 1600 348**,** EP 0578 546 **et** EP 1 987 993. Le premier remplissage de ces réservoirs sur la chaîne de montage du véhicule, se fait à l'aide d'un appareil de purge comportant des moyens d'aspiration d'air, de pompage de liquide de frein et de réaspiration de liquide de frein en excédent. Ces différents moyens sont reliés à une tête munie d'un embout. Pour remplir le réservoir en même temps que le circuit de frein, un opérateur place la tête de l'appareil de purge sur le bord du goulot du réservoir de liquide de frein du véhicule. Cette tête est appliquée de manière étanche contre le bord et elle est bloquée par des griffes venant se placer sous le bord.

Après cette mise en place, l'appareil fait le vide dans le réservoir et le circuit de frein. Une fois le vide réalisé, l'appareil remplit le circuit de frein et le réservoir avec du liquide de frein. Ce remplissage se fait jusqu'à refus, c'est-à-dire jusqu'à ce que le niveau arrive au moins au bord du goulot.

Puis dans une troisième phase opératoire, l'appareil aspire le liquide de frein en excédent jusqu'à ce que le niveau de référence du liquide de frein dans le goulot du réservoir arrive à la hauteur de l'ouverture d'un embout prolongeant la tête de l'appareil de purge.

A partir de ce moment le liquide ne peut plus être aspiré.

Cet appareil de purge est installé sur la chaîne de montage et ne doit pas être modifié quels que soient les véhicules arrivant sur la chaîne c'est-à-dire dont on veut purger et remplir le circuit de frein et le réservoir de liquide de frein.

Cela signifie que quel que soit le réservoir, le niveau de remplissage de liquide de frein se situe toujours à une hauteur déterminée par rapport au bord du goulot puisque cette hauteur correspond en quelque sorte à la longueur de l'embout de la tête de l'appareil de purge.

Or pour des raisons liées au développement des circuits de frein et à leurs différents équipements, notamment pour fonctionner selon des modes tels que ABS, ASR, etc.., il faut qu'il subsiste un volume d'air plus important dans le réservoir de liquide de frein que celui qui reste entre le niveau de référence défini par l'extrémité de l'embout de la tête de l'appareil de purge et le dessus du goulot, recevant un capuchon.

Ce problème est particulièrement délicat dans le cas d'un réservoir de liquide de frein muni d'un goulot de hauteur importante. En effet selon la place disponible pour le réservoir dans l'enceinte du moteur qui surmonte toujours le maître-cylindre tandem auquel il est attaché, il faut allonger le goulot pour que celui-ci soit accessible pour le premier remplissage et aussi pour remettre à niveau le liquide de frein en cas d'intervention sur le circuit de frein ou de fuite.

Or les constructeurs excluent toutes modifications de la tête de l'appareil de purge et de son embout sur les chaînes de montage à cause de la diversité des véhicules, car cela compliquerait la gestion du montage.

### But de l'invention

La présente invention a pour but de développer un réservoir de liquide de frein qui puisse être rempli de liquide de frein à un niveau de consigne défini en fonction du circuit de frein, et indépendamment de la tête de l'appareil de purge.

### Exposé et avantages de l'invention

A cet effet la présente invention concerne un réservoir de liquide de frein du type défini ci-dessus caractérisé en ce que le goulot comporte :
- un tube de niveau, ayant une extrémité haute et une extrémité basse, ouvertes,
- l'extrémité haute étant située au-dessus du niveau de référence pour recevoir de manière étanche l'embout de la tête, et
- l'extrémité basse débouchant à la hauteur du niveau de remplissage de consigne.

Le réservoir de liquide de frein selon l'invention peut être rempli de liquide de frein à un niveau de consigne déterminé, librement en fonction des données liées au circuit de frein, sans avoir à modifier ni la structure ni le fonctionnement de l'appareil de purge et en particulier la tête et la longueur de l'embout. Le réservoir de liquide de frein s'utilise ainsi comme un réservoir traditionnel, sans que l'opérateur qui installe la tête de l'appareil de purge sur le goulot du réservoir pour purger l'air du circuit de frein puis remplir le circuit avec du liquide de frein, n'ait à se préoccuper du niveau de remplissage particulier du réservoir.

Suivant les types de circuit de frein, chaque réservoir peut être muni d'un tube de niveau qui garantit le niveau de remplissage de consigne particulier de ce réservoir.

On réserve ainsi le volume d'air dans le réservoir, nécessaire au fonctionnement du circuit de frein et en même temps on évite un volume inutile de liquide de frein dans le réservoir et son éventuel débordement.

Le tube de niveau peut être réalisé en une seule pièce avec le réservoir de liquide de frein ou séparément de celui-ci. La réalisation du tube de niveau indépendamment du réservoir ne nécessite pratiquement pas de modification du moule servant à la fabrication du réservoir puisqu'il suffit de compléter le réservoir par des organes de centrage recevant l'extrémité inférieure du tube de niveau. Si le tube de niveau est fabriqué séparément, sa fabrication peut être uniformisée pour différents niveaux de remplissage de consigne, et seule la longueur du tube sera modifiée.

L'invention s'adapte également tout particulièrement à des réservoirs de liquide de frein qui ont un goulot de longueur particulière voire inhabituelle, rendue nécessaire par la position du réservoir de frein dans l'enceinte du moteur du véhicule, entre les différents composants.

Suivant une autre caractéristique avantageuse, le tube est réalisé indépendamment du réservoir et comporte des éléments de centrage pour positionner au moins son extrémité haute dans l'axe du goulot pour recevoir l'embout, et des éléments de positionnement en hauteur définissant le niveau de consigne lorsque le tube est installé dans le goulot.

Le tube réalisé indépendamment du réservoir se fabrique très simplement par injection de matière plastique dans un moule. Le moule est lui-même de forme simple sans nécessiter de pièce mobile.

Suivant une autre caractéristique avantageuse, les éléments de centrage sont constitués par des pattes de centrage s'appuyant contre la surface intérieure du goulot.

Cette réalisation est particulièrement avantageuse car les pattes de centrage permettent non seulement de positionner l'orifice de l'extrémité haute du tube pour recevoir l'embout et le maintenir pour l'introduction de l'embout.

Suivant une autre caractéristique avantageuse, les éléments de positionnement en hauteur sont constitués par des pattes de centrage portées par le goulot et par une butée réalisée sur le tube de niveau venant s'appuyer sur les pattes de centrage.

Cette réalisation des moyens de positionnement en hauteur facile la mise en place du tube de niveau par simple engagement.

Suivant une autre caractéristique avantageuse, la butée est constituée par un épaulement formé par une diminution d'épaisseur du tube de niveau et les pattes de centrage sont réunies à un anneau recevant l'extrémité basse du tube de niveau.

Cette réalisation est très intéressante car elle complète le centrage du tube de niveau à son extrémité inférieure dans l'anneau porté par les pattes, cet anneau servant en même temps d'élément de retenue pour la butée constituée par l'épaulement résultant de la diminution de l'épaisseur de la paroi du tube, diminution de l'épaisseur qui se poursuit jusqu'à l'extrémité inférieure du tube.

Ces moyens de butée et de centrage permettent de résister à la poussée exercée au moment de l'introduction de l'embout dans l'ouverture haute du tube de niveau.

Suivant une autre caractéristique avantageuse, l'étanchéité entre le tube de niveau et l'embout est réalisée par un moyen d'étanchéité tel qu'une lèvre intérieure, périphérique bordant l'ouverture haute du tube de niveau. L'efficacité de cette lèvre garantit l'étanchéité, pour l'aspiration du liquide de frein en excédent, pour descendre jusqu'au niveau de consigne. Cette lèvre ne complique pas l'introduction de l'embout dans l'extrémité haute du tube et permet d'absorber le jeu inévitable de centrage de l'extrémité haute du tube dans le goulot par rapport à la position centrée de l'embout et de la tête.

L'assemblage du tube de niveau dans le goulot peut se faire par vissage ou plus simplement par enclipsage. Cet enclipsage peut se faire à l'extrémité des pattes de centrage du tube en partie haute du goulot et/ou être complété ou remplacé par l'enclipsage de la partie basse du tube de niveau dans l'anneau de centrage du goulot.

Ces formes de réalisation ne compliquent nullement la fabrication du réservoir, en deux parties, démoulables puisque les pattes de centrage réunies ou non par un anneau, sont radiales et se réalisent dans le moule sans nécessiter de parties mobiles telles que des tiroirs.

De façon générale le tube de niveau lorsqu'il est indépendant du réservoir, est de préférence fabriqué en matière plastique par injection.

### Dessins

La présente invention sera décrite ci-après de manière plus détaillée à l'aide d'un mode de réalisation représenté schématiquement dans les dessins annexés dans lesquels :
La figure 1 est une vue en coupe d'un réservoir de liquide de frein limité à sa partie munie du goulot de remplissage recevant la tête de l'appareil de purge.
La figure 2 est une vue en coupe analogue à celle de la figure 1 montrant le réservoir avec son goulot et le tube de niveau ;
La figure 3 est une vue en perspective du tube de niveau.
La figure 4 est une vue de dessus du réservoir dans l'axe du goulot.
La figure 5 est une vue à échelle agrandie de la lèvre d'étanchéité de l'entrée du tube de niveau autour de l'embout de la tête de l'appareil de purge.
La figure 6 est un schéma d'exemple d'implantation d'un réservoir de liquide de frein dans l'enceinte d'un moteur de véhicule automobile.

### Description d'un mode de réalisation de l'invention

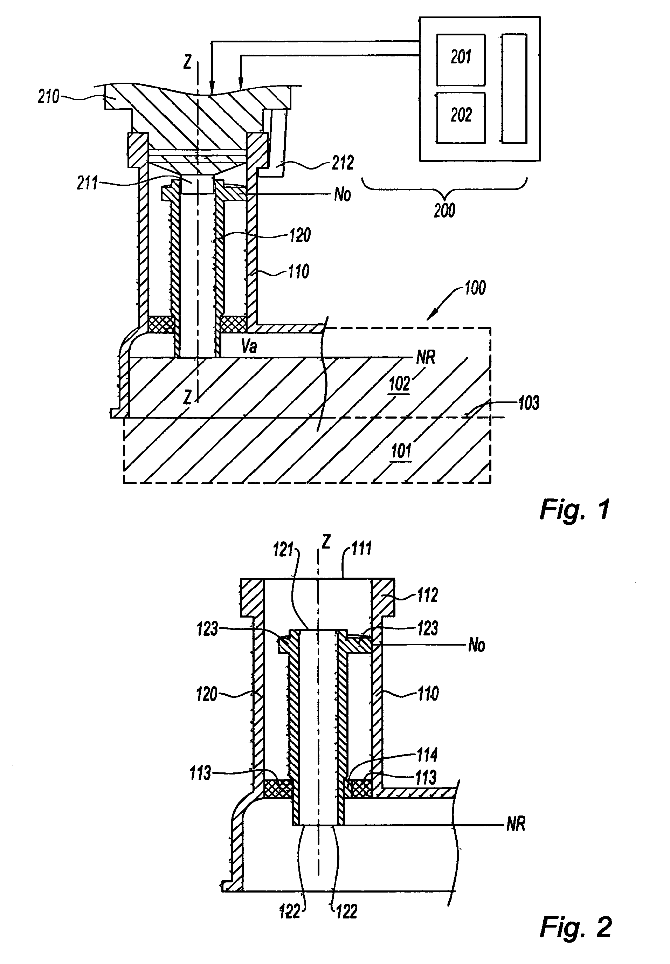

Selon la figure 1, l'invention concerne un réservoir de liquide de frein 100 représenté schématiquement par sa partie comportant le goulot de remplissage 110. Le réservoir de frein 100 selon cet exemple est constitué de deux parties une partie inférieure 101 et une partie supérieure 102, en matière plastique, moulées séparément l'une de l'autre et assemblées ensuite suivant le plan de jonction 103.

La partie supérieure 102 comporte le goulot de remplissage 110. Dans le présent exemple, le goulot de remplissage est allongé, par nécessité d'implantation de ce réservoir entre différents composants du moteur. Ce réservoir 100 est relié à un maître-cylindre en général un maître-cylindre tandem du circuit de frein pour l'alimenter en liquide de frein.

Le premier remplissage du circuit de frein et du réservoir avec du liquide de frein se fait sur la chaîne de montage des véhicules et cela d'une manière automatique à l'aide d'un appareil de purge 200 muni d'une tête 210 comportant un embout 211 que l'opérateur place sur l'orifice 111 du goulot 110 et la fixe de manière étanche à l'aide des griffes d'accrochage 212 venant sous le bord 112 du goulot 110. L'appareil de purge 200, non détaillé, comporte une pompe à vide 201 et une alimentation en liquide frein 202 avec réaspiration reliée à la tête 210. Après mise en place de la tête 210 sur le goulot 110, automatiquement l'appareil purge d'abord le réservoir 100 et le circuit de frein auquel il est relié par l'intermédiaire du maître-cylindre de façon à évacuer tout l'air de cet ensemble et permettre ensuite de le remplir avec du liquide de frein jusqu'à un niveau approprié appelé niveau de consigne NR. Pour des raisons de conception et de fonctionnement du circuit de frein (dilatation du liquide, volume de liquide très variable pris par les différents accessoires du circuit de frein), il faut laisser un volume d'air Va suffisant dans le réservoir 100 au-dessus du niveau de liquide. Cela impose que le niveau de liquide de frein au moment du remplissage doit atteindre le niveau de consigne NR fixé, sans le dépasser.

Selon l'invention, pour permettre ce remplissage jusqu'au niveau de consigne NR sans avoir à modifier la tête 210 et son embout 211, le réservoir 100 comporte dans son goulot 110 un tube de mise à niveau 120. Ce tube de mise à niveau ou plus simplement tube de niveau 120 est porté dans le goulot 110 par l'intermédiaire d'éléments de centrage et de réglage de hauteur de façon que l'ouverture 121 à son extrémité haute puisse recevoir de manière étanche l'embout 211 de la tête de purge 210 et que son extrémité basse 122 débouche dans le réservoir 100 dans le plan du niveau de consigne NR.

Les explications données ci-après et les références se feront par rapport à la direction verticale définie par l'axe ZZ du goulot 110 qui correspond à la position du goulot en phase de remplissage du réservoir 100.

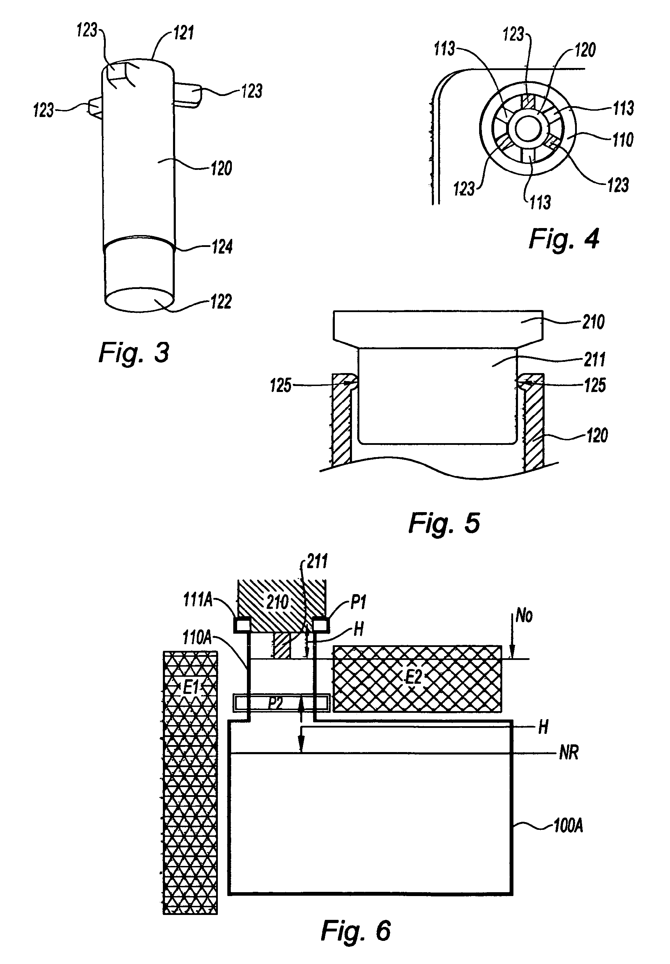

Plus particulièrement selon les figures 2 et 3, le tube de niveau 120 est tenu dans le goulot 110 dans une position appropriée en fonction du niveau de référence No et du niveau de remplissage de consigne NR par des éléments de centrage constitués par des pattes de centrage 123, radiales par exemple trois pattes réparties de manière équiangulaire autour de l'ouverture 121 en partie haute du tube de façon à ce que la partie haute du tube soit tenue centrée suivant l'axe ZZ dans le goulot 110. En partie basse, le goulot 110 comporte des pattes de centrage radiales 113 dont les extrémités tournées vers l'axe ZZ définissent la position de centrage de l'extrémité inférieure du tube de niveau 120. Ces pattes 113 forment également une butée de positionnement en hauteur pour le tube de niveau 120 pour que son ouverture basse 122 soit située dans le plan du niveau de remplissage NR. Le tube de niveau 120 comporte des butées de réglage en hauteur. Dans l'exemple représenté, les pattes de centrage 113 solidaires de la partie inférieure du goulot sont réunies par un anneau de centrage 114 réalisé en même temps que les pattes 113, le goulot 110 et de la partie supérieure 102 du réservoir. La butée de réglage en hauteur du tube de niveau 120 est constituée par un épaulement 124 résultant d'une diminution d'épaisseur de la paroi du tube 120.

Ces caractéristiques du tube de niveau apparaissent clairement à la figure 3 qui montre les trois pattes de centrage 123 près de l'extrémité supérieure et l'épaulement 124 formé par la réduction d'épaisseur de paroi du tube près de son extrémité inférieure.

Selon les figures 1 et 2, les pattes de centrage 123 du tube de niveau se trouvent près de la partie supérieure de manière à bien positionner l'ouverture 121 par rapport à l'axe ZZ pour que l'introduction de l'embout 211 de la tête 210 dans le tube puisse se faire normalement.

La butée 124 de réglage en hauteur et les pattes de centrage 113 de la partie inférieure du goulot doivent résister à la poussée exercée par l'engagement de l'embout 211 dans l'extrémité supérieure du tube 120 au début de la mise en place de la tête 210.

La figure 4 montre en vue de dessus, la disposition rayonnante, décalée angulairement des pattes de centrage 123 du tube 120 et de celle 113 du goulot 110.

S'agissant chaque fois de trois pattes 113, 123, celles-ci sont réparties de manière égale les unes par rapport aux autres à 60 degrés de sorte que la disposition globale est régulière.

La figure 5 est une vue à échelle agrandie de l'embout 211 venant dans l'extrémité supérieure du tube 120 comportant un moyen d'étanchéité tel qu'une lèvre périphérique d'étanchéité 125 pour recevoir l'embout.

Selon la figure 1, le remplissage du réservoir au niveau de consigne NR avec un appareil de purge 200 à tête usuelle 210, se fait en installant de manière étanche la tête 210 sur et dans l'orifice 111 du goulot 110, l'embout 211 se logeant de manière étanche dans l'orifice supérieur 121 du tube de niveau 120. L'embout 211 arrive ainsi au niveau de référence No qui pour l'invention constitue un simple repère permettant de définir la longueur du tube 120.

Au cours d'une première phase, l'appareil 200 aspire l'air dans l'enceinte formée par le réservoir 100, le maître-cylindre tandem et le circuit de frein. Une fois le vide établi au cours d'une seconde phase, l'appareil 200 remplit l'ensemble ainsi évacué avec du liquide de frein jusqu'à refus, c'est-à-dire même au-dessus du niveau de référence No. Le liquide de frein passe par le tube de niveau 120, remplit le circuit, le maître-cylindre tandem et le réservoir en remontant dans le goulot 110 dans et autour du tube de niveau 120.

Dans la troisième phase de remplissage, l'appareil 200 aspire le liquide à travers le tube de niveau 120 puisque l'embout 211 est engagé de manière étanche dans le tube 120. Le liquide descend ainsi dans le goulot 110 jusqu'à atteindre le niveau de l'orifice bas 122 du tube de niveau 120, c'est-à-dire le niveau de consigne de remplissage NR.

A ce moment l'appareil de purge 200 ne peut plus aspirer de liquide. Cette fin d'aspiration est détectée par l'appareil 200 qui s'arrête, le cycle de remplissage étant terminé. Ensuite la tête 210 est détachée du goulot 110 du réservoir et l'opérateur ferme le réservoir avec son capuchon.

La figure 6 est une vue schématique d'exemple d'implantation d'un réservoir de liquide de frein 100A entre des composants E1, E2 dans l'enceinte du moteur d'un véhicule. Pour tenir compte de cet encombrement, puisque le réservoir de liquide de frein 100A se trouve à côté du composant E1 et sous le composant E2, le réservoir comporte un goulot allongé 110A, pour que son ouverture 111A remonte au-dessus du niveau de l'élément E2 et se trouve ainsi en position P1. Dans les conditions habituelles, avec un goulot de longueur réduite, l'entrée du goulot se situerait dans la position P2 alors qu'avec un goulot allongé l'entrée se trouve dans la position P1 au-dessus de l'élément E2.

La figure 6 permet de comparer le volume de vide réalisable avec un appareil de purge. Dans le cas d'un réservoir à goulot normal, non allongé, qui se trouve dans la position P2, l'appareil de purge réalise un volume d'air situé au-dessus du niveau de consigne NR. Ce niveau se trouve à la hauteur H en dessous du goulot en position P2. Cette hauteur H correspond à la profondeur de pénétration de la tête 210 de l'appareil de purge dans le goulot du réservoir.

Le volume d'air ainsi laissé au-dessus du niveau de consigne NR et le volume d'air se compose du volume d'air situé au niveau du goulot et du volume d'air important situé dans le corps du réservoir.

Mais dans le cas d'un goulot de longueur plus importante par exemple ayant la longueur représentée avec un orifice de goulot en position P1, on voit très schématiquement que l'appareil de purge ne peut réaspirer du liquide que sur la hauteur H dans le goulot allongé 110A qui correspond au niveau de référence No. Le volume d'air dans le goulot est insuffisant pour le fonctionnement du circuit de frein. Ainsi dans un réservoir de liquide de frein, connu, l'appareil de purge ne peut atteindre le niveau de consigne NR.

### NOMENCLATURE

- 100: Réservoir
- 101: Coquille inférieure
- 102: Coquille supérieure
- 103: Plan de jonction
- 110, 110A: Goulot
- 111: Orifice
- 112: Bord du goulot
- 113: Pattes(s) de centrage
- 114: Anneau de centrage et de butée
- 120: Tube de niveau
- 121: Ouverture haute
- 122: Ouverture basse
- 123: Patte(s) de centrage
- 124: Epaulement
- 125: Lèvre d'étanchéité
- 200: Appareil de purge
- 210: Tête
- 211: Embout
- 201: Pompe à vide
- 202: Alimentation en liquide de frein
- ZZ: Axe vertical/axe du goulot
- No: Niveau de référence
- NR: Niveau de consigne
- P1: Niveau de l'orifice d'un goulot allongé
- P2: Niveau de l'orifice d'un goulot normal
- E1: Composant du moteur
- E2: Composant du moteur

## Revendications

1. Réservoir de liquide de frein pour un circuit de frein de véhicule, destiné à être rempli par un appareil de purge (200) à un niveau de consigne (NR), déterminé indépendamment de l'appareil de purge,
le réservoir (100) comportant un goulot et l'appareil de purge (200) comportant une tête (210) s'appuyant de manière étanche sur le goulot (110) pour purger le réservoir et le circuit de frein avant le remplissage avec le liquide de frein, la tête se prolongeant par un embout (211) définissant le niveau de référence (No) du liquide de frein dans le réservoir lorsque la
tête (210) est appliquée contre le goulot (110),
- le réservoir comportant un goulot allongé (110) dont l'ouverture remonte au-dessus des composants (E2) dans l'enceinte du moteur,
- un tube de niveau (120) réalisé indépendamment du réservoir (100), ayant une extrémité haute (121) et une extrémité basse (122), ouvertes,
- des éléments de positionnement en hauteur (113, 114, 124) définissant le niveau de consigne (NR) lorsque le tube (120) est installé dans le goulot (110) l'extrémité basse (122) débouchant a la hauteur du niveau de remplissage de consigne (NR),
- l'extrémité haute (121) étant située au-dessus du niveau de référence (No) pour recevoir de manière étanche l'embout (211) de la tête (210),
**caractérisé en ce que** le tube (120) comporte des éléments de centrage (123) pour positionner au moins son extrémité haute (121) dans l'axe (ZZ) du goulot (110) pour recevoir l'embout (211), **en ce que** les éléments de positionnement en hauteur sont constitués par des pattes de centrage (113) portées par le goulot (110) et par une butée (124) réalisée sur le tube de niveau (120) venant s'appuyer sur les pattes de
centrage (113), et **en ce que** la butée (124) est constituée par une diminution d'épaisseur du tube de niveau (120) et les pattes de centrage (113) sont réunies a un anneau (114) recevant l'extrémité basse du tube de niveau (120).

2. Réservoir de liquide de frein selon la revendication **1**,
**caractérisé en ce que**
les éléments de centrage sont constitués par des pattes de centrage (123) s'appuyant contre la surface intérieure du goulot (110).

3. Réservoir de liquide de frein selon la revendication 1, **caractérisé en ce que**
le tube de niveau est réalisé en matière plastique.

## Claims

1. Brake fluid reservoir for a vehicle brake circuit, intended to be filled by a purge apparatus (200) to a datum level (NR), determined independently of the purge apparatus,
the reservoir (100) comprising a neck and the purge apparatus (200) comprising a head (210) that presses fluid-tightly against the neck (110) to purge the reservoir and the brake circuit before filling with brake fluid, the head being extended by an end fitting (211) defining the reference level (No) of the brake fluid in the reservoir when the head (210) is pressed against the neck (110),
- the reservoir comprising an elongate neck (110), the opening of which extends above components (E2) in the engine compartment,
- a fill-level tube (120) produced independently of the reservoir (100) having an open top end (121) and an open bottom end (122),
- heightwise positioning elements (113, 114, 124) defining the datum level (NR) when the tube (120) is installed in the neck (110), the bottom end (122) opening at the height of the datum filling level (NR),
- the top end (121) being situated above the reference level (No) in order fluid-tightly to accept the end fitting (211) of the head (210),
- **characterized in that** the tube (120) comprises centring elements (123) for positioning at least its top end (121) along the axis (ZZ) of the neck (110) to accept the end fitting (211), **in that** the heightwise positioning elements consist of centring tabs (113) borne by the neck (110) and of an end stop (124) produced on the fill-level tube (120) and that presses against the centring tabs (113), and **in that** the end stop (124) consists of a reduction in thickness of the fill-level tube (120) and the centring tabs (113) are joined to a ring (114) that accepts the bottom end of the fill-level tube (120).

2. Brake fluid reservoir according to Claim 1, **characterized in that** the centring elements consist of centring tabs (123) pressing against the interior surface of the neck (110).

3. Brake fluid reservoir according to Claim 1, **characterized in that** the fill-level tube is made of plastic.

## Patentansprüche

1. Bremsflüssigkeitsbehälter für einen Fahrzeugbremskreis, der dazu vorgesehen ist, mittels einer Entlüftungsvorrichtung (200) auf einen Sollfüllstand (NR) gefüllt zu werden, der unabhängig von der Entlüftungsvorrichtung bestimmt wird,
wobei der Behälter (100) einen Stutzen aufweist und die Entlüftungsvorrichtung (200) einen Kopf (210) aufweist, der sich in dichter Weise am Stutzen (110) abstützt, um den Behälter und den Bremskreis vor dem Füllen mit der Bremsflüssigkeit zu entlüften, wobei der Kopf durch ein Ansatzstück (211) verlängert ist, das den Referenzfüllstand (No) der Bremsflüssigkeit im Behälter definiert, wenn der Kopf (210) am Stutzen (110) anliegt,
- wobei der Behälter einen langgestreckten Stutzen (110) aufweist, dessen Öffnung über die Bestandteile (E2) im Motorraum steigt,
- ein Füllstandrohr (120), das unabhängig vom Behälter (100) ausgebildet ist und ein oberes Ende (121) und ein unteres Ende (122) aufweist, die offen sind,
- Elemente zur Höhenpositionierung (113, 114, 124), die den Sollfüllstand (NR) definieren, wenn das Rohr (120) im Stutzen (110) angeordnet ist, wobei das untere Ende (122) auf Höhe des Sollfüllstands (NR) ausmündet,
- wobei das obere Ende (121) über dem Referenzfüllstand (No) liegt, um das Ansatzstück (211) des Kopfes (210) in dichter Weise aufzunehmen, **dadurch gekennzeichnet, dass** das Rohr (120) Zentrierelemente (123) aufweist, um zumindest sein oberes Ende (121) für die Aufnahme des Ansatzstücks (211) in der Achse (ZZ) des Stutzens (110) zu positionieren, die Höhenpositionierungselemente durch Zentrierlaschen (113) gebildet sind, die am Stutzen (110) und an einem am Füllstandrohr (120) ausgebildeten Anschlag (124) vorgesehen sind, welcher an den Zentrierlaschen (113) in Anlage gelangt, und der Anschlag (124) durch eine Verringerung der Dicke des Füllstandrohrs (120) gebildet ist und die Zentrierlaschen (113) an einem Ring (114) zusammenlaufen, der das untere Ende des Füllstandrohrs (120) aufnimmt.

2. Bremsflüssigkeitsbehälter nach Anspruch 1, **dadurch gekennzeichnet, dass**
die Zentrierelemente durch Zentrierlaschen (123) gebildet sind, die sich an der Innenfläche des Stutzens (110) abstützen.

3. Bremsflüssigkeitsbehälter nach Anspruch 1, **dadurch gekennzeichnet, dass**
das Füllstandrohr aus Kunststoff besteht.
